(19) Europäisches Patentamt / European Patent Office / Office européen des brevets

(11) EP 3 006 482 A1

(12) **EUROPEAN PATENT APPLICATION**
published in accordance with Art. 153(4) EPC

(43) Date of publication:
**13.04.2016 Bulletin 2016/15**

(21) Application number: **14807491.7**

(22) Date of filing: **30.05.2014**

(51) Int Cl.:
*C08G 63/12* (2006.01) *C08G 63/183* (2006.01)
*C08L 67/02* (2006.01) *C08J 5/00* (2006.01)

(86) International application number:
**PCT/KR2014/004826**

(87) International publication number:
**WO 2014/196768 (11.12.2014 Gazette 2014/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.06.2013 KR 20130064966**

(71) Applicant: **Samsung Fine Chemicals Co., Ltd.**
**Ulsan 680-090 (KR)**

(72) Inventors:
- **KIM, Ye Jin**
  **Seoul 130-100 (KR)**
- **KANG, Gyung Don**
  **Daejeon 305-768 (KR)**
- **KIM, Su Kyung**
  **Daejeon 302-859 (KR)**
- **KIM, Min Kyoung**
  **Seoul 158-755 (KR)**
- **CHOI, Soo Youn**
  **Jeonju-si**
  **Jeollabuk-do 560-896 (KR)**
- **YOON, Ki Chull**
  **Suwon-si**
  **Gyeonggi-do 443-817 (KR)**
- **BYUN, Kil Seuk**
  **Yongin-si**
  **Gyeonggi-do 448-519 (KR)**

(74) Representative: **Kador & Partner**
**Corneliusstraße 15**
**80469 München (DE)**

(54) **BIODEGRADABLE POLYESTER RESIN AND ARTICLE CONTAINING SAME**

(57) Provided are a biodegradable polyester resin and an article including the resin. The provided biodegradable polyester resin includes an aliphatic dicarboxylic acid residue including a succinic acid residue and an adipic acid residue; and an aliphatic diol residue including at least one selected from the group consisting of an ethylene glycol residue and a butanediol residue in order to improve biodegradability and flexibility,.

EP 3 006 482 A1

## Description

### TECHNICAL FIELD

One or more embodiments of the present invention relate to a biodegradable polyester resin and an article including the same, and more particularly, to a highly flexible biodegradable polyester resin which is prepared by esterification and condensation polymerization of an aliphatic dicarboxylic acid and an aliphatic diol, and an article including the same.

### BACKGROUND ART

Plastics have been using usefully in real life because of high functionality and durability thereof. However, conventional plastics are slowly degraded by microorganisms after being reclaimed or discharge harmful gases when they are incinerated and thereby cause environmental pollution. As these problems of conventional plastics are recognized, biodegradable plastics have been developed.

Among biodegradable plastics, a biodegradable polyester resin is drawing attention. A biodegradable polyester resin refers to a polymer which may be degraded by natural microorganisms such as bacteria, algae, and fungi into water and carbon dioxide or into water and methane gas. Such a biodegradable polyester resin is presented as a powerful solution to environmental pollution caused by reclamation or incineration.

A biodegradable polyester resin includes polyglycolic acid, polyhydroxybutyric acid, polylactic acid, and aliphatic polyester. While polyglycolic acid and polyhydroxybutyric acid, which are obtained by biosynthesis, require a high production cost, the price of polylactic acid is similar to that of conventional polyolefin resins and thus economic feasibility of the polylactic acid may be secured. However, the polylactic acid is hard to apply to a product because polylactic acid has very low flexibility and tear characteristics.

Recently, Showa High Polymer, Japan, successfully synthesized aliphatic polyesters of a high molecular weight, patented the aliphatic polyesters, and named it as Bionolle. Among the aliphatic polyesters, poly(butylene succinate) (PBS), which was synthesized by using 1,4-butandiol and succinic acid, have excellent degradability, a melting point similar to that of polyethylene, and mechanical properties equivalent to those of olefin-based polymers, but also had a disadvantage of low flexibility. In other words, although PBS has excellent biodegradability and thus the potential to replace conventional plastics, which are considered as one of the main causes of environmental pollution, to be used as a food packaging film, its use has been limited due to the low flexibility.

### DETAILED DESCRIPTION OF THE INVENTION TECHNICAL PROBLEM

One embodiment of the present invention provides a highly flexible biodegradable polyester resin which maintains biodegradability by including an aliphatic dicarboxylic acid residue and an aliphatic diol residue.

Another embodiment of the present invention provides an article including the biodegradable polyester resin.

### TECHNICAL SOLUTION

An aspect of the present invention provides a biodegradable polyester resin including an aliphatic dicarboxylic acid residue including a succinic acid residue and an adipic acid residue; and an aliphatic diol residue including at least one selected from the group consisting of an ethylene glycol residue and a butanediol residue.

The content of the aliphatic diol residue may be from about 1 to about 2 parts by mole based on 1 part by mole of the aliphatic dicarboxylic acid residue.

The content of the succinic acid residue and the content of the adipic acid residue may be from about 0.8 to 0.995 part by mole and from about 0.005 to about 0.2 part by mole, respectively, based on 1 part by mole of the aliphatic dicarboxylic acid residue.

The biodegradable polyester resin may further include a terephthalic acid residue.

The total content of the adipic acid residue and the terephthalic acid residue may be from about 0.005 to about 0.3 part by mole base on 1 part by mole of the total content of the aliphatic dicarboxylic acid residue and the terephthalic acid residue.

The content of the succinic acid residue, the content of the adipic acid residue, and the content of the terephthalic acid residue may be from about 0.7 to about 0.994 part by mole, from about 0.005 to about 0.299 part by mole, and from about 0.001 to about 0.295 part by mole, respectively, based on 1 part by mole of the total content of the aliphatic dicarboxylic acid residue and the terephthalic acid residue.

The biodegradable polyester resin may have a weight average molecular weight of from about 120,000 to about 350,000.

Another aspect of the present invention provides an article including the biodegradable polyester resin.

ADVANTAGEOUS EFFECTS OF THE INVENTION

According to the one or more of the above embodiments of the present invention, there may be provided a biodegradable polyester resin having not only excellent biodegradability but also excellent flexibility by including an aliphatic dicarboxylic acid residue and an aliphatic diol residue.

BEST MODE

Hereinafter, a biodegradable polyester resin according to one embodiment of the present invention is described in detail.

The term "polyester" used herein refers to a synthetic polymer prepared by esterification and condensation polymerization of at least one difunctional or polyfunctional carboxylic acid and at least one difunctional or polyfunctional hydroxyl compound. The difunctional carboxylic acid is dicarboxylic acid, and the difunctional hydroxyl compound is a dihydric alcohol, for example, glycol or diol.

The term "butanediol" used herein refers to a compound formed by replacing two hydrogen atoms of butane with hydroxyl groups, specifically, a compound including 1,4-butanediol, 1,3-butanediol and/or 2,3-butanediol.

The term "crystallization" used herein refers to forming a region where chains of a resin that is in a noncrystalline or melted state are partially aligned at an arbitrary temperature lower than a melting point and equal to or higher than a glass transition temperature.

A biodegradable polyester resin according to one embodiment of the present invention includes an aliphatic dicarboxylic acid residue including a succinic acid residue and an adipic acid residue; and an aliphatic diol residue including at least one selected from the group consisting of an ethylene glycol residue and a butanediol residue.

The term "residue" used herein refers to, when a specific compound participate in a chemical reaction, a certain part or unit derived from the specific compound and included in a product of the chemical reaction. For example, "aliphatic dicarboxylic acid residue," "aliphatic diol residue," and "terephthalic acid residue" refer to, in polyester formed by esterification and condensation polymerization, a part derived from an aliphatic dicarboxylic acid or a derivative thereof, a part derived from an aliphatic diol or a derivative thereof, and a part derived from a terephthalic acid or a derivative thereof, respectively. For example, a succinic acid residue may be represented by ($-OC-C_2H_4-CO-$), an adipic acid residue may be represented by ($-OC-C_4H_8-CO-$), an ethylene glycol residue may be represented by ($-O-C_2H_4-O-$), a butanediol residue may be represented by ($-O-C_4H_8-O-$), and a terephthalic acid residue may be represented by ($-OC-C_6H_4-CO-$).

The term "aliphatic dicarboxylic acid derivative" used herein refers to a compound including an ester derivative, an acyl halide derivative, and an anhydride derivative of an aliphatic dicarboxylic acid compound.

The term "aliphatic diol derivative'' used herein refers to a compound including dimethylene glycol, trimethylene glycol, tetramethylene glycol, pentamethylene glycol, diethylene glycol, and triethylene glycol.

The term "terephthalic acid derivative'' used herein refers to a compound including an ester derivative, an acyl halide derivative, and an anhydride derivative of a terephthalic acid compound.

The biodegradable polyester resin may be represented by Chemical Formula 1.

[Chemical Formula 1]

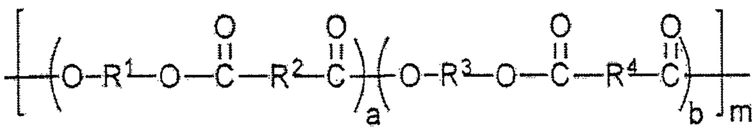

In Chemical Formula 1, "a" is an integer from about 1 to about 2,500, "b" is an integer from about 1 to about 2,500, and "m" is an integer from about 1 to about 1,500. $R^1$ and $R^3$ may each independently be a substituted or unsubstituted $C_2$ or $C_4$ alkylene group. One of $R^2$ and $R^4$ may be a substituted or unsubstituted $C_2$ alkylene group, and the other may be a substituted or unsubstituted $C_4$ alkylene group.

For example, when both $R^1$ and $R^3$ are an ethylene group and $R^2$ and $R^4$ are an ethylene group and a butylene group, respectively, the biodegradable polyester resin may be poly(ethylene succinate-co-adipate) (PESA). For example, when both $R^1$ and $R^3$ are an butylene group and $R^2$ and $R^4$ are an ethylene group and a butylene group, respectively, the biodegradable polyester resin may be poly(butylene succinate-co-adipate) (PBSA).

In addition, when the biodegradable polyester resin further includes a terephthalic acid residue, the biodegradable polyester resin may be represented by Chemical Formula 2.

[Chemical Formula 2]

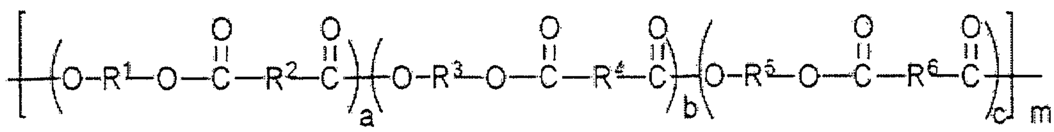

In Chemical Formula 2, "a" is an integer from about 1 to about 2,500, "b" is an integer from about 1 to about 2,500, "c" is an integer from about 1 to about 2,500, and "m" is an integer from about 1 to about 1,000. $R^1$, $R^3$, and $R^5$ may each independently be a substituted or unsubstituted $C_2$ or $C_4$ alkylene group. $R^2$, $R^4$, and $R^6$ may be a substituted or unsubstituted $C_2$ alkylene group, a substituted or unsubstituted $C_4$ alkylene group, and a substituted or unsubstituted $C_6$ phenylene group, respectively.

For example, when $R^1$, $R^3$, and $R^5$ are a butylene group and $R^2$, $R^4$, and $R^6$ are an ethylene group, a butylene group, and a phenylene group, respectively, the biodegradable polyester resin may be poly(butylene succinate-co-adipate-co-terephthalate) (PBSAT). For example, when $R^1$, $R^3$, and $R^5$ are an ethylene group and $R^2$, $R^4$, and $R^6$ are an ethylene group, a butylene group, and a phenylene group, respectively, the biodegradable polyester resin may be (poly(ethylene succinate-co-adipate-co-terephthalate) (PESAT).

When the aliphatic dicarboxylic acid and the aliphatic diol are stoichiometrically reacted during the polymerization for preparing the biodegradable polyester resin, the aliphatic dicarboxylic acid and the aliphatic diol may react with each other at a molar ratio of 1:1. The ratio of the used amount of the aliphatic diol to the used amount of the aliphatic dicarboxylic acid may be 1:1, but an excessive amount of the aliphatic diol may be used in comparison to the used amount of the aliphatic dicarboxylic acid to facilitate the reaction and increase the yield of the biodegradable polyester resin. For example, the content of the aliphatic diol residue may be from about 1 to about 2 parts by mole based on 1 part by mole of the aliphatic dicarboxylic acid residue.

In addition, the content of the succinic acid residue and the content of the adipic acid residue in the biodegradable polyester resin may be from about 0.8 to about 0.995 part by mole and from about 0.005 to about 0.2 part by mole, respectively based on 1 part by mole of the aliphatic dicarboxylic acid residue.

When the content of the succinic acid residue is within the range, the rate of crystallizing and solidifying the biodegradable polyester resin is increased in the pelletization process so that much time may not be consumed for pelletization and a biodegradable polyester resin having high strength and improved flexibility may be obtained.

When the content of the adipic acid residue is within the range, a biodegradable polyester resin having a high molecular weight, high strength, and improved flexibility may be obtained.

The biodegradable polyester resin may further include a terephthalic acid residue. The terephthalic acid residue is not included in an aliphatic dicarboxylic acid residue but may be derived from terephthalic acid or dimethyl terephthalate which may cause esterification by reacting with a diol.

Generally, an aromatic carboxylic acid residue in a resin provides high crystallinity to a resin to increase the strength of a resin. When the biodegradable polyester resin further includes a terephthalic acid residue, it is advantageous to pelletize the resin, since the rate of crystallizing and solidifying the biodegradable polyester resin is increased in the pelletization process, and a biodegradable polyester resin having high strength and improved flexibility may be obtained.

The total content of the adipic acid residue and the terephthalic acid residue in the biodegradable polyester resin may be from about 0.005 to about 0.3 part by mole based on 1 part by mole of the total content of the terephthalic acid residue and the aliphatic dicarboxylic acid residue.

When the total content of the adipic acid residue and the terephthalic acid residue in the biodegradable polyester resin is within the range, the rate of crystallizing and solidifying the biodegradable polyester resin is increased in the pelletization process so that much time may not be consumed for pelletization and a biodegradable polyester resin having high strength and improved flexibility may be obtained.

The content of the succinic acid residue, the content of the adipic acid residue, and the content of the terephthalic acid residue may be from about 0.7 to about 0.994 part by mole, from about 0.005 to about 0.299 part by mole, and from about 0.001 to about 0.295 part by mole, respectively, based on 1 part by mole of the total content of the aliphatic dicarboxylic acid residue and the terephthalic acid residue.

The biodegradable polyester resin may have a weight average molecular weight of from about 120,000 to about 350,000. For example, the biodegradable polyester resin may have a weight average molecular weight of from about 140,000 to about 350,000.

Another embodiment of the present invention provides an article including the biodegradable polyester resin. An article including the biodegradable polyester resin may be, for example, a medical supply such as a suture thread

and a mouthpiece requiring flexibility.; a disposable household item such as an envelope, a shopping bag, a glove, and a tablecloth; a fishing net/fishing gear such as a fishing net, a fishing line, and a green-net; a construction material such as drain board; and a mulching film for agriculture.

Hereinafter, a method of preparing the biodegradable polyester resin may described in detail.

The biodegradable polyester resin described above may be prepared by a method described below. In other words, the biodegradable polyester resin may be prepared by esterification and condensation polymerization of aliphatic dicarboxylic acid or a derivative thereof corresponding to the aliphatic dicarboxylic acid residue, and an aliphatic diol or a derivative thereof corresponding to the aliphatic diol residue.

Specifically, an aliphatic dicarboxylic acid or a derivative thereof including succinic acid and adipic acid; and an aliphatic diol or a derivative thereof including at least one selected from the group consisting of ethylene glycol and butanediol may be esterified to obtain an oligomer having an ester bond, and the oligomer may undergo condensation polymerization to prepare a biodegradable polyester resin.

In the esterification, the used amount of an aliphatic diol or a derivative thereof may be from about 1.0 to about 2.0 parts by mole based on 1 part by mole of the used amount of aliphatic dicarboxylic acid or a derivative thereof. When the used amount of the aliphatic diol or a derivative thereof is within the range, not only the aliphatic dicarboxylic acid or a derivative thereof reacts completely but also a depolymerization by which an ester bond is broken may not occur, and cost increase by an excessive use of the aliphatic diol may be avoided. If it occur, the depolymerization may be caused by acidolysis of residual dicarboxylic acid.

In addition, in the esterification, the used amount of succinic acid and the used amount of adipic acid may be from about 0.8 to about 0.995 part by mole and from about 0.005 to about 0.2 part by mole, respectively, based on 1 part by mole of the used amount of aliphatic dicarboxylic acid.

In addition, for example, an aliphatic dicarboxylic acid including succinic acid and adipic acid or a derivative thereof; an aliphatic diol including at least one selected from the group consisting of ethylene glycol and butanediol or a derivative thereof; and terephthalic acid or a derivative thereof may be esterified to obtain an oligomer having an ester bond, and the oligomer obtained by the esterification may undergo condensation polymerization to prepare a biodegradable polyester resin.

In the esterification, the total of the used amount of the adipic acid and the used amount of the terephthalic acid or a derivative thereof may be from about 0.005 to about 0.3 part by mole based on 1 part by mole of the total used amount of the terephthalic acid or a derivative thereof and the aliphatic dicarboxylic acid or a derivative thereof.

The used amount of the succinic acid, the used amount of the adipic acid, and the used amount of the terephthalic acid or a derivative thereof may be from about 0.7 to about 0.994 part by mole, from about 0.005 to about 0.299 part by mole, and from about 0.001 to about 0.295 part by mole, respectively, based on 1 part by mole of the total of the used amount of the terephthalic acid or a derivative thereof and the used amount of the aliphatic dicarboxylic acid or a derivative thereof combined.

The esterification may be performed at from about 140 to about 200°C for from about 80 to about 450 minutes. For example, when ethylene glycol is used as an aliphatic diol, the esterification may be performed at from about 140 to about 190°C for from about 80 to about 240 minutes. When butanediol is used as an aliphatic diol, the esterification may be performed at from about 140 to about 200°C for from about 150 to about 450 minutes.

An endpoint of the esterification may be determined by measuring the amount of alcohol or water, which is a byproduct of the esterification. For example, when 0.95 mol of succinic acid and 0.05 mol of adipic acid are used as an aliphatic dicarboxylic acid, and 1.3 mol of ethylene glycol is used as an aliphatic diol, the esterification may be ended at a time when more than 90% (i.e., 1.8 mol) of 2 mol of water, which is supposed to be generated as byproducts as it is assumed that all the used succinic acid and adipic acid react with ethylene glycol, is produced as a byproduct. As an another example, when 0.9 mol of succinic acid, 0.05 mol of adipic acid, and 0.05 mol of dimethyl terephthalate are used as a dicarboxylic acid or a derivative thereof, and 1.3 mol of butanediol is used as an aliphatic diol, the esterification may be ended at a time when more than 90% (i.e., 1.71 mol) of 1.9 mol of water and 90% (i.e, 0.09 mol) of 0.1 mol of methanol, which are supposed to be generated as byproducts as it is assumed that all the used succinic acid, adipic acid, and dimethyl terephthlate react with butanediol, are produced as byproducts.

In the esterification, to increase the reaction rate by shifting the chemical equilibrium, the produced alcohol, water, and/or an unreacted diol compound may be discharged out of the reaction system by evaporation or distillation.

To facilitate the esterification, the esterification may be performed under the presence of a catalyst, a branching agent, a thermal stabilizer, and/or a color control agent.

The catalyst may include magnesium acetate, tin (II) acetate, tetra-n-butyl titanate, lead acetate, sodium acetate, potassium acetate, antimony trioxide, N, N-dimethylaminopyridine, N-methylimidazole, or a combination thereof. The catalyst is generally put with a monomer at the same time when the monomer is added to a reactor. The used amount of the catalyst may be, for example, from 0.00001 to about 0.2 part by mole based on 1 part by mole of the used amount of the aliphatic dicarboxylic acid. When the content of the catalyst is within the range, the reaction time may be reduced, a desired degree of polymerization may be obtained, and a biodegradable polyester resin having high tensile strength/

tear strength and good chromaticity may be obtained.

The thermal stabilizer may be an organic or inorganic phosphorous compound. The organic or inorganic phosphorous compound may be, for example, phosphoric acid and an organic ester thereof, and phosphorous acid and an organic ester thereof. For example, the thermal stabilizer may be a commercially available substance including phosphoric acid, and an alkyl or aryl phosphate compound. For example, the thermal stabilizer may be triphenyl phosphate. When the catalyst and the thermal stabilizer are used together, the used amount of the thermal stabilizer may be, for example, from about 0.00001 to about 0.2 part by mole based on 1 part by mole of the used amount of the aliphatic dicarboxylic acid. When the used amount of the thermal stabilizer is within the range, deterioration and discoloration of the biodegradable polyester resin may be prevented.

The branching agent is used to control biodegradability or physical properties of a polyester resin. As the branching agent, a compound having at least three groups enabling to form an ester or an amide, which are selected from the group consisting of a carboxylic group, a hydroxyl group, and an amine group, may be used. Specifically, as the branching agent, trimellitic acid, citric acid, maleic acid, glycerol, a monosaccharide, a disaccharide, dextrin, or a reduced sugar may be used.

The used amount of the branching agent may be from about 0.00001 to about 0.2 part by mole based on 1 part by mole of the aliphatic dicarboxylic acid. When the used amount of the branching agent is within the range, a biodegradable polyester resin having high tensile strength and high tear strength may be obtained.

The esterification may be performed under normal pressure. The term "normal pressure" used herein refers to pressure in a range of about $760\pm10$ Torr.

The color control agent is an additive used to control chromaticity of the biodegradable polyester resin. As the color control agent, cobalt acetate may be used. The color control agent may be used either in the esterification along with an aliphatic diol and an aliphatic dicarboxylic acid or in condensation polymerization which will be described later.

The used amount of the color control agent may be from about 0.00001 to about 0.2 part by mole based on 1 part by mole of the aliphatic dicarboxylic acid.

An oligomer having an ester bond is generated by the esterification.

The product (i.e., oligomer) of the esterification may further undergo condensation polymerization for polymerization. The condensation polymerization may be performed at a temperature from about 220 to about 290°C for from about 120 to about 360 minutes. For example, when ethylene glycol is used as an aliphatic diol, the condensation polymerization may be performed at a temperature from about 240 to about 290°C for from about 240 to about 360 minutes. When butanediol is used as an aliphatic diol, the condensation polymerization may be performed at a temperature from about 220 to about 250°C for from about 120 to about 280 minutes.

The condensation polymerization may be performed under a pressure of 1 Torr or lower. As such, the condensation polymerization may be performed in a vacuum to remove an unreacted raw material (an unreacted monomer), a low-molecular weight oligomer, and water, which is a byproduct, to obtain a biodegradable polyester resin having a high molecular weight.

Hereinafter, the present invention will be described in further detail with reference to examples, but the present invention is not limited to these examples.

MODE OF THE INVENTION

Examples

<Examples 1 to 3: Synthesis of PESA>

(Esterification)

Ethylene glycol (EG), succinic acid (SA), adipic acid (AA), tetra-n-butyl titanate (TBT), and maleic acid (MA) of the quantities shown in Table 1 below were put into a 500 ml three-neck round bottom flask having a condenser, a nitrogen inlet, and a stirrer to prepare a mixture. Then, the mixture was heated to a temperature shown in Table 2 and reacted while stirring in nitrogen atmosphere until 32 ml or more of water was discharged. The produced water was completely discharged through the condenser out of the system. Then, triphenyl phosphate (TPP) and cobalt acetate (CA) (5 wt% in ethylene glycol) were put into the three-neck round bottom flask and the resulting mixture was stirred for 5 minutes.

(Condensation polymerization)

Subsequently, the three-neck round bottom flask was heated in a vacuum of 1 Torr or lower to a temperature shown in Table 2 below. After the mixture underwent a reaction at the temperature shown in Table 2 below during the

time shown in Table 2 below, the products in the flask were discharged. As a result, PESA was obtained.

<Examples 4 to 6: Synthesis of PBSA>

PBSA was synthesized by the same method as the PESA synthesis in Examples 1 to 3, except that 1,4 butanediol (BDO) was used instead of EG.

Table 1 shows the amount of the monomers and additives used in each Example.

<Table 1>

| | EG (g(mol)) | BDO (g(mol) ) | SA (g(mol)) | AA (g(mol)) | MA (g(mmol) ) | TPP (g(mmol) ) | TBT (g(mmol)) | CA (g(mmol)) |
|---|---|---|---|---|---|---|---|---|
| Example 1 | 124.14 (2.0) | - | 112.19 (0.95) | 7.31 (0.05) | 0.4 (2.983) | 1.0 (3.065) | 0.15 (0.440) | 1.0 (0.201) |
| Example 2 | 124.14 (2.0) | - | 117.50 (0.995) | 0.73 (0.005) | 0.4 (2.983) | 1.0 (3.065) | 0.15 (0.440) | 1.0 (0.201) |
| Example 3 | 124.14 (2.0) | - | 106.28 (0.9) | 14.61 (0.1) | 0.4 (2.983) | 1.0 (3.065) | 0.15 (0.440) | 1.0 (0.201) |
| Example 4 | - | 180.24 (2.0) | 94.47 (0.8) | 19.23 (0.2) | 0.3 (2.237) | 0.1 (0.307) | 0.25 (0.735) | 0.4 (0.080) |
| Example 5 | - | 108.15 (1.2) | 82.66 (0.7) | 43.84 (0.3) | 0.3 (2.237) | 0.1 (0.307) | 0.25 (0.735) | 0.2 (0.040) |
| Example 6 | - | 135.18 (1.5) | 117.62 (0.996) | 0.59 (0.004) | 0.3 (2.237) | 0.1 (0.307) | 0.25 (0.735) | 0.2 (0.040) |

<Table 2>

| | Esterification temperature (°C) | Condensation polymerization temperature(°C) | Condensation polymerization time(min) |
|---|---|---|---|
| Example 1 | 190 | 280 | 150 |
| Example 2 | 190 | 280 | 150 |
| Example 3 | 190 | 280 | 150 |
| Example 4 | 200 | 240 | 160 |
| Example 5 | 200 | 240 | 160 |
| Example 6 | 200 | 240 | 160 |

<Examples 7 to 8: Synthesis of PBSAT>

(Esterification)

1,4-butanediol (BDO), dimethyl terephthalate (DMT), and TBT (first) of the quantities shown in Table 3 below were put into a 500 ml three-neck round bottom flask having a condenser, a nitrogen inlet, and a stirrer to prepare a mixture. Then, the resulting mixture was heated to a temperature shown in Table 4 and reacted while stirring in nitrogen atmosphere until 90% of a theoretical amount of methanol to be produced was discharged (See Table 4). The produced methanol was completely discharged through the condenser out of the system. After the reaction was completed, MA and TPP were added to the three-neck round bottom flask, and then SA and AA were added to the three-neck round bottom flask. Then, the resulting mixture was heated to a temperature shown in Table 4 and reacted while stirring until 90% of a theoretical amount of water to be produced was discharged (See Table 4). The produced water was completely discharged through the condenser out of the system. Then, TBT (second) of the quantity shown in Table 3 below and CA (5 wt% in ethylene glycol) were put into the three-neck round bottom flask and the resulting mixture was stirred for 5 minutes. Table 3 shows the amount of the monomers and additives used in each Example.

(Condensation polymerization)

Subsequently, the three-neck round bottom flask was heated in a vacuum of 1 Torr or lower to a temperature shown in Table 4 below. After the mixture underwent a reaction the temperature shown in Table 4 below during the time shown in Table 4 below, the products in the flask were discharged. As a result, PBSAT was obtained.

<Example 9: Synthesis of PBSAT>

PBSAT was synthesized by the same method as the PBSAT synthesis in Examples 7 to 8, except that CA was not used as a color control agent. Table 3 shows the amount of the monomers and additives used in Example 9.

<Examples 10 to 11: Synthesis of PESAT>

PESAT was synthesized by the same method as the PBSAT synthesis in Examples 7 to 8, except that EG was used instead of BDO.

Table 3 shows the amount of the monomers and additives used in each Example.

<Table 3>

| | EG (g(mol)) | BDO (g(mol)) | SA (g(mol)) | AA (g(mol)) | DMT (g(mol)) | MA (g(mmol)) | TPP (g(mmol)) | TBT(g(mmol)) | | CA (g(mmol)) |
|---|---|---|---|---|---|---|---|---|---|---|
| | | | | | | | | First | Second | |
| Example 7 | - | 108.14 (1.2) | 82.66 (0.70) | 21.92 (0.15) | 29.13 (0.15) | 0.3 (2.237) | 0.1 (0.307) | 0.2 (0.587) | 0.05 (0.147) | 0.4 (0.080) |
| Example 8 | - | 108.14 (1.2) | 117.50 (0.995) | 0.37 (0.0025) | 0.49 (0.0025) | 0.3 (2.237) | 0.1 (0.307) | 0.2 (0.587) | 0.05 (0.147) | 0.4 (0.080) |
| Example 9 | - | 108.14 (1.2) | 100.38 (0.85) | 10.96 (0.075) | 14.56 (0.075) | 0.3 (2.237) | 0.1 (0.307) | 0.2 (0.587) | 0.05 (0.147) | - |
| Example 10 | 102.12 (1.7) | - | 70.85 (0.6) | 29.23 (0.2) | 38.84 (0.2) | 0.4 (2.983) | 1.0 (3.065) | 0.1 (0.293) | 0.05 (0.147) | 1.0 (0.201) |
| Example 11 | 90.18 (1.5) | - | 117.62 (0.996) | 0.29 (0.002) | 0.39 (0.002) | 0.4 (2.983) | 1.0 (3.065) | 0.1 (0.293) | 0.05 (0.147) | 1.0 (0.201) |

<Table 4>

| | Esterification temperature( °C ) | 90% or more of theoretical amount of methanol(ml) | 90% or more of theoretical amount of water(ml) | Condensation polymerization temperature( °C) | Condensation polymerization time(min) |
|---|---|---|---|---|---|
| Example 7 | 200 | 11 | 27.5 | 240 | 160 |
| Example 8 | 200 | 0.2 | 32 | 240 | 160 |
| Example 9 | 200 | 5.5 | 30 | 240 | 160 |
| Example 10 | 190 | 15 | 26 | 280 | 150 |
| Example 11 | 190 | 0.15 | 32.5 | 280 | 150 |

<Comparative Example 1>

4560M poly (butylene succinate) (PBS) available from S-EnPol Co., Ltd. was used.

<Evaluation Example>

The weight average molecular weight ($M_w$), melt flow index (MFI), flexural strength, biodegradability, and processability of the biodegradable polyester resin synthesized in Examples 1 to 11 and the PBS resin of Comparative Example 1 were measured by the following methods, and the results are shown in Table 5 below.

<Measurement of $M_w$>

The biodegradable polyester resins of the Examples and Comparative Example were diluted with chloroform to a concentration of 1 wt% to prepare a solution to measure a weight average molecular weight ($M_w$) by gel permeation chromatography (GPC). The measurement was performed at 35 °C at a flow rate of 1 ml/min.

<Measurement of MFI>

MFI was measured according to the ASTM D1238 method by measuring the amount (g) of the biodegradable polyester resins flowing out at 190°C under a load of 2.16 kg for 10 minutes.

<Measurement of Flexural Strength >

Flexural strength was measured by modifying the ASTM D790 method. A injection molded specimen having a length/width/thickness of 8cm/1.2cm/0.4cm was prepared and located on a U-shaped support fixture. Then, an Instron was used to apply force with a 10 kN load cell at the center of the specimen interposed on the U-shaped support fixture. The maximum value of the force was measured until the displacement in the vertical direction (i.e., the direction parallel to the thickness of the specimen) reached 10 mm. The distance between the two points of the support fixture in contact with the specimen was 70 mm. The measurement was performed three times, and the average value was recorded as the flexural strength. A smaller flexural strength means better flexibility.

<Evaluation of Biodegradability>

Evaluation of biodegradability was performed according to the KS M 3100-1, which is a method to measure aerobic biodegradability of a plastic under composting conditions. A cumulative biodegradability for 45 days was calculated by using Equation 1, and the result is shown in Table 5.

<Equation 1>

$$\text{Biodegradability (\%)} = \{[CO_2]sf*100/[CO_2]st\}*100/\{[CO_2]cf*100/[CO_2]ct\}$$

$[CO_2]$sf: Cumulative amount of $CO_2$ generated by biodegradation of a sample for 45 days.
$[CO_2]$ st: Total amount of $CO_2$ which may be generated by 100% biodegradation of a sample.
$[CO_2]$cf: Cumulative amount of $CO_2$ generated by biodegradation of a cellulose sample as a standard sample for 45 days.
$[CO_2]$ct: Total amount of $CO_2$ which may be generated by 100% biodegradation of a cellulose sample as a standard sample.

<Evaluation of Processability>

Processability was evaluated with reference to the time required for a finally polymerized resin to be crystallized when the resin was kept at room temperature (25°C). The time for the resin to be crystallized refers to the time for a transparent resin (melted state) to change a white resin (crystalline state) by visual inspection. The results are shown in Table 5.

◎: Time required to be crystallized was less than 5 minutes (Excellent)

○: Time required to be crystallized was more than 5 minutes but 30 minutes or less (Good)

×: Time required to be crystallized was more than 30 minutes (Poor)

<Table 5>

| | | $M_w$ | MFI (g/10min) | Flexural strength (MPa) | biodegradability (%) | Processability |
|---|---|---|---|---|---|---|
| Example 1 | PESA | 284,200 | 29 | 16 | 75 | ○ |
| Example 2 | PESA | 276,000 | 30 | 18 | 66 | ○ |
| Example 3 | PESA | 264,000 | 32 | 10 | 78 | ○ |
| Example 4 | PBSA | 193,000 | 2 | 7 | 72 | ○ |
| Example 5 | PBSA | 189,000 | 3 | 4 | 82 | × |
| Example 6 | PBSA | 177,000 | 4.5 | 20 | 60 | ◎ |
| Example 7 | PBSAT | 172,000 | 5 | 7 | 82 | ○ |
| Example 8 | PBSAT | 187,000 | 4 | 19 | 76 | ◎ |
| Example 9 | PBSAT | 189,000 | 3.9 | 9 | 71 | ○ |
| Example 10 | PESAT | 324,000 | 17 | 3 | 77 | × |
| Example 11 | PESAT | 227,000 | 38 | 21 | 60 | ◎ |
| Comparativ e Example 1 | 4560M | 175,000 | 4 | 26 | 61 | ◎ |

As shown in Table 5, the biodegradable polyester resin of Examples 1 to 11 had a higher weight average molecular weight (172,000 or higher) and improved flexibility (20 MPa or lower) in comparison to the biodegradable polyester resin of Comparative Example 1 and maintained biodegradability (60% or higher).

In addition, the biodegradable polyester resin of Examples 7 to 11 further including a terephthalic acid residue had a higher crystallinity and thus had higher tensile strength than that of the polyester resin of Examples 1 to 6.

While the present invention has been particularly shown and described with reference to exemplary embodiments thereof, it will be understood by those of ordinary skill in the art that various changes in form and details may be made therein without departing from the spirit and scope of the present invention as defined by the following claims.

Accordingly, the scope of the invention will need to be defined in the accompanying claims.

**Claims**

1. A biodegradable polyester resin comprising an aliphatic dicarboxylic acid residue including a succinic acid residue and an adipic acid residue; and an aliphatic diol residue including at least one selected from the group consisting of an ethylene glycol residue and a butanediol residue.

2. The biodegradable polyester resin of claim 1, wherein the content of the aliphatic diol residue is from about 1 to about 2 parts by mole based on 1 part by mole of the aliphatic dicarboxylic acid residue.

3. The biodegradable polyester resin of claim 1, wherein the content of the succinic acid residue and the content of the adipic acid residue are from about 0.8 to 0.995 part by mole and from about 0.005 to about 0.2 part by mole, respectively, based on 1 part by mole of the aliphatic dicarboxylic acid residue.

4. The biodegradable polyester resin of claim 1, wherein the biodegradable polyester resin further comprises a terephthalic acid residue.

5. The biodegradable polyester resin of claim 1, wherein the total content of the adipic acid residue and the terephthalic acid residue is from about 0.005 to about 0.3 part by mole based on 1 part by mole of the total content of the terephthalic acid residue and the aliphatic dicarboxylic acid residue.

6. The biodegradable polyester resin of claim 4, wherein the content of the succinic acid residue, the content of the adipic acid residue, and the content of the terephthalic acid residue are from about 0.7 to about 0.994 part by mole, from about 0.005 to about 0.299 part by mole, and from about 0.001 to about 0.295 part by mole, respectively, based on 1 part by mole of the total content of the terephthalic acid residue and the aliphatic dicarboxylic acid.

7. The biodegradable polyester resin of claim 1, wherein the biodegradable polyester resin has a weight average molecular weight of from about 120,000 to about 350,000.

8. An article comprising a biodegradable polyester resin of any one of claims 1 to 7.

INTERNATIONAL SEARCH REPORT

International application No.
**PCT/KR2014/004826**

A. CLASSIFICATION OF SUBJECT MATTER

*C08G 63/12(2006.01)i, C08G 63/183(2006.01)i, C08L 67/02(2006.01)i, C08J 5/00(2006.01)i*

According to International Patent Classification (IPC) or to both national classification and IPC

B. FIELDS SEARCHED

Minimum documentation searched (classification system followed by classification symbols)

C08G 63/12; C08L 3/02; C08L 65/00; C08L 101/16; C08L 67/06; C08L 67/02; C08L 67/00; B32B 27/30; C05G 3/00; C05C 9/00; B32B 27/36; C08G 63/183; C08J 5/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: biodegradability, polyester, resin, flexible, dicarboxylic acid, diol, succinic acid, adipic acid, butanediol

C. DOCUMENTS CONSIDERED TO BE RELEVANT

| Category* | Citation of document, with indication, where appropriate, of the relevant passages | Relevant to claim No. |
|---|---|---|
| X | KR 10-0174649 B1 (TORAY CHEMICAL KOREA INC.) 01 April 1999<br>See pages 5-1, 5-2 and 5-3. | 1-8 |
| A | JP 5053500 B2 (EASTMAN CHEMICAL COMPANY) 17 October 2012<br>See paragraphs [0020]-[0040]. | 1-8 |
| A | KR 10-1151939 B1 (EASTMAN CHEMICAL COMPANY) 01 June 2012<br>See paragraphs [008]-[0020]. | 1-8 |
| A | KR 10-0909200 B1 (MITSUBISHI PLASTICS, INC) 23 July 2009<br>See paragraphs [0077]-[0092]. | 1-8 |
| A | JP 2001-089283 A (MITSUBISHI CHEMICALS CORPORATION) 03 April 2001<br>See paragraphs [0029]-[0035]. | 1-8 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 SEPTEMBER 2014 (22.09.2014) | **22 SEPTEMBER 2014 (22.09.2014)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

**INTERNATIONAL SEARCH REPORT**
Information on patent family members

International application No.
**PCT/KR2014/004826**

| Patent document cited in search report | Publication date | Patent family member | Publication date |
|---|---|---|---|
| KR 10-0174649 B1 | 01/04/1999 | KR 10-1997-0065614 A | 13/10/1997 |
| JP 5053500 B2 | 17/10/2012 | AT 312876 T | 15/12/2005 |
| | | DE 60115922 D1 | 19/01/2006 |
| | | DE 60115922 T2 | 06/07/2006 |
| | | EP 1317506 A2 | 11/06/2003 |
| | | EP 1317506 B1 | 14/12/2005 |
| | | JP 2004-509205 A | 25/03/2004 |
| | | US 6767972 B1 | 27/07/2004 |
| | | WO 02-22737 A2 | 21/03/2002 |
| | | WO 02-22737 A3 | 30/05/2002 |
| KR 10-1151939 B1 | 01/06/2012 | AU 2004-309338 A1 | 14/07/2005 |
| | | AU 2004-309338 B2 | 09/09/2010 |
| | | AU 2004-309361 A1 | 14/07/2005 |
| | | AU 2004-309361 B2 | 20/01/2011 |
| | | CA 2549990 A1 | 14/07/2005 |
| | | CA 2549990 C | 16/06/2009 |
| | | CA 2550002 A1 | 14/07/2005 |
| | | CA 2550002 C | 14/07/2009 |
| | | CN 103122129 A | 29/05/2013 |
| | | CN 1898324 A | 17/01/2007 |
| | | CN 1898324 B | 03/11/2010 |
| | | CN 1898324 C0 | 17/01/2007 |
| | | EP 1697461 A1 | 06/09/2006 |
| | | EP 1697462 A1 | 06/09/2006 |
| | | JP 2007-515543 A | 14/06/2007 |
| | | JP 2007-515546 A | 14/06/2007 |
| | | JP 2012-062490 A | 29/03/2012 |
| | | JP 2012-193387 A | 11/10/2012 |
| | | KR 10-1152076 B1 | 11/06/2012 |
| | | US 2005-0137332 A1 | 23/06/2005 |
| | | US 2005-0137356 A1 | 23/06/2005 |
| | | US 7160977 B2 | 09/01/2007 |
| | | US 7368511 B2 | 06/05/2008 |
| | | WO 2005-063881 A1 | 14/07/2005 |
| | | WO 2005-063883 A1 | 14/07/2005 |
| KR 10-0909200 B1 | 23/07/2009 | EP 1810821 A1 | 25/07/2007 |
| | | JP 2006-159905 A | 22/06/2006 |
| | | JP 4678637 B2 | 27/04/2011 |
| | | US 2009-0074998 A1 | 19/03/2009 |
| | | WO 2006-051920 A1 | 18/05/2006 |
| JP 2001-089283 A | 03/04/2001 | NONE | |

Form PCT/ISA/210 (patent family annex) (July 2009)